# EUROPEAN PATENT APPLICATION

(11) **EP 4 064 270 A1**
(43) Date of publication of application: **28.09.2022**
(21) Application number: 20889542.5
(22) Date of filing: 29.10.2020
(51) Int. Cl.: G10H 1/34

(54) **DETECTION SYSTEM, PLAYING OPERATION DEVICE, ELECTRONIC KEYBOARD INSTRUMENT, AND DETECTION METHOD**

(30) Priority: 20.11.2019 JP 2019209681
(71) Applicant: YAMAHA CORPORATION, Hamamatsu-shi Shizuoka, 430-8650 (JP)
(72) Inventor: KANEHARA, Akinori, Hamamatsu-shi, Shizuoka 430-8650 (JP); ISHII, Jun, Hamamatsu-shi, Shizuoka 430-8650 (JP)
(74) Representative: Kehl, Ascherl, Liebhoff & Ettmayr Patentanwälte Partnerschaft mbB
(86) International application number: PCT/JP2020/040654
(87) International publication number: WO 2021/100435

(57) **Abstract**

A detection system detects a position of each of a plurality of movable members that are displaceable by a playing operation. The detection system includes a controller configured to generate a first signal with a signal that level discontinuously changes over time, a Pi filter configured to convert the first signal to a second signal with a signal level that continuously changes over time, and a signal processor configured to generate, using the second signal, an output signal that depends on a position of each of the plurality of movable members.

## Description

### Technical Field

The present disclosure relates to techniques for detecting movements of a movable member.

### Background Art

Techniques have been proposed for detecting displacement of each of a plurality of keys of a musical keyboard instrument, such as an in electronic piano. For example, Patent Document 1 discloses a configuration for detecting a position of each of the keys by use of a coil (first coil) disposed on a frame of a musical keyboard instrument, and a coil (second coil) disposed on each of the keys. In this configuration, when the second coil is pressed and it approaches the first coil, a cyclic signal supplied to the first coil changes, thereby generating a detection signal indicative of pressing of a key.

### Related Art Document

### Patent Document

Patent Document 1: WO 2019/122867

### SUMMARY OF THE INVENTION

### Problems to be Solved by the Invention

However, in the technique of Patent Document 1, the cyclic signal supplied to the first coil is a square wave signal having a signal level that changes discontinuously, and it includes a high frequency component. This high frequency component is conduction noise or radiation noise, and it affects other electronic musical instruments around the musical keyboard instrument. Thus, electromagnetic compatibility (EMC) may not be ensured.

In view of the circumstances described above, an object of one aspect of the present disclosure is to achieve EMC in a system for detecting a displacement of a movable member, such as a key.

### Means for Solving the Problems

To achieve the above-stated object, a detection system according to one aspect of the present disclosure is a detection system for detecting a position of each of a plurality of movable members that are displaceable by a playing operation, the detection system including: a controller configured to generate a first signal with a signal level that discontinuously changes over time; a signal converter configured to convert the first signal to a second signal with a signal level that continuously changes over time; and a signal processor configured to generate, using the second signal, an output signal that depends on a position of each of the plurality of movable members.

An instrument playing apparatus according to one aspect of the present disclosure includes: a plurality of movable members that are displaceable by a playing operation; a controller configured to generate a first signal with a signal level that discontinuously changes over time; a signal converter configured to convert the first signal to a second signal with a signal level that continuously changes over time; and a signal processor configured to generate, using the second signal, an output signal that depends on a position of each of the plurality of movable members.

An electronic musical keyboard instrument according to one aspect of the present disclosure includes: a plurality of keys that are displaceable by a playing operation; a controller configured to generate a first signal with a signal level that discontinuously changes over time; a signal converter configured to convert the first signal to a second signal with a signal level that continuously changes over time; a signal processor configured to generate, using the second signal, an output signal that depends on a position of each of the plurality of movable members; and a sound source circuit configured to generate an audio signal in accordance with the output signal generated by the signal processor.

A detection method according to one aspect of the present disclosure is a detection method for detecting a position of each of a plurality of movable members that are displaceable by a playing operation, the detection method including: generating a first signal with a signal level that discontinuously changes over time; converting the first signal to a second signal with a signal level that continuously changes over time; and generating, using the second signal, an output signal that depends on a position of each of the plurality of movable members.

### BRIEF DESCRIPTION OF THE DRAWINGS

FIG. 1 is a block diagram showing a configuration of a musical keyboard instrument according to an embodiment.
FIG. 2 is a block diagram showing a configuration of the musical keyboard instrument.
FIG. 3 is a circuit diagram of a detection system.
FIG. 4 is a circuit diagram of a detectable portion.
FIG. 5 is a circuit diagram of a resonant circuit.
FIG. 6 is a timing chart showing that selection signals are supplied by the controller.
FIG. 7 is a circuit diagram of a detection system according to a modification.
FIG. 8 is a schematic diagram of a configuration in which the detection system is applied to a strike mechanism of the musical keyboard instrument.
FIG. 9 is a schematic diagram of a configuration in which the detection system is applied to a pedal mechanism of the musical keyboard instrument.
FIG. 10 is a partial configuration of a detection system according to a modification.

### MODES FOR CARRYING OUT THE INVENTION

### A: Embodiments

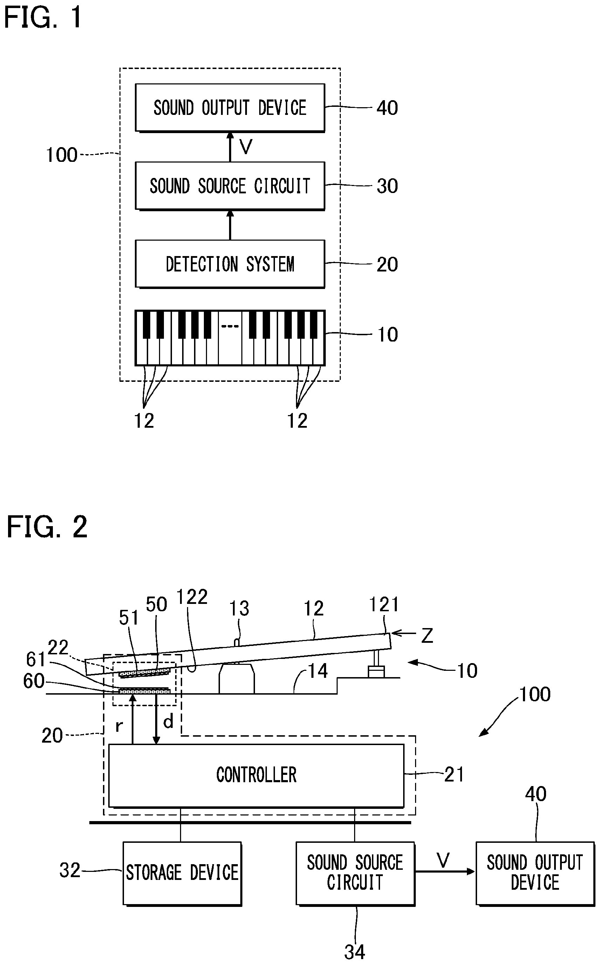

FIG. 1 is a block diagram showing a configuration of a musical keyboard instrument 100 according to an embodiment of the present disclosure. As shown in FIG. 1, the musical keyboard instrument 100 is an electronic musical keyboard instrument including a keyboard 10, a detection system 20, a sound source circuit 30 and a sound output device 40.

The keyboard 10 comprises keys 12 including black and white keys. The keys 12 are each movable members that are displaced by a playing operation of a user. A playing operation is an operation carried out by a user to play the musical instrument, and it includes a playing operation of each key 12 (i.e., an instrument operation).

FIG. 2 is a block diagram showing a specific configuration of the musical keyboard instrument 100, focusing on one of the keys 12 of the keyboard 10. Each of the keys 12 of the keyboard 10 is supported by a supporting member 14 by way of the supporter (balance pin) 13 that acts as a fulcrum. The supporting member 14 is a structure (frame) that supports each element of the musical keyboard instrument 100. The end 121 of each key 12 is displaced vertically by pressing and releasing keys by a user.

The detection system 20 detects a position of each key 12. That is, the detection system 20 detects a playing operation by the user (an instrument operation on each of the keys 12). The detection system 20 detects a vertical position Z of an end 121 of each of the keys 12. The position Z is expressed by an amount of displacement of the end 121, relative to a rest position of the end 121 in a released state in which no load is applied to the key 12.

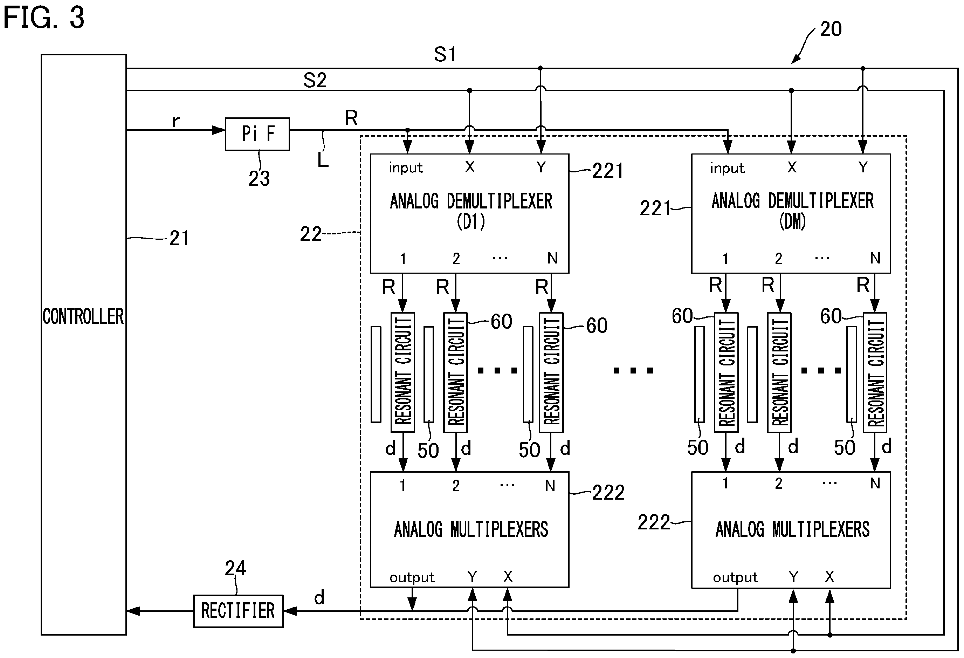

FIG. 3 is a circuit diagram showing an example of an electrical configuration of the detection system 20. As shown in FIG. 3, the detection system 20 includes a controller 21, a signal processor 22, a Pi (II) filter 23, and a rectifier 24.

The controller 21 comprises one or more processors for controlling each of the elements of the musical keyboard instrument 100. For example, the controller 31 is constituted of one or more types among different types, such as a Central Processing Unit (CPU), a Sound Processing Unit (SPU), a Digital Signal Processor (DSP), a Field Programmable Gate Array (FPGA), or an Application Specific Integrated Circuit (ASIC).

As shown in FIG. 2, the controller 21 is connected to the storage device 32 and the sound source circuit 34 via a bus, and comprises a computer system by these components. In this embodiment, execution of a program stored in the storage device 32 allows for the controller 21 to realize the functions of the sound source circuit 34. The controller 21 is an example of a "controller."

The storage device 32 comprises one or more memories that store programs executed by the controller 21 and data used by the controller 21. The storage device 32 is constituted of, for example, a known recording medium, such as a magnetic recording medium or a semiconductor recording medium. The storage device 32 may comprise a combination of different types of recording media. The storage device 32 may be a portable recording medium detachable from the musical keyboard instrument 100, or it may be an external recording medium (e.g., online storage), with which the musical keyboard instrument 100 can communicate.

The controller 21 outputs a first signal r to the Pi filter 23. The first signal r is a voltage signal having a signal level that fluctuates discontinuously. For example, the first signal r is a square wave signal having a signal level that periodically changes from high to low, or vice versa. The first signal r is a binary digital signal.

The Pi filter 23 is a low-pass filter that converts the first signal r to a second signal R. The Pi filter 23 is an example of a "signal converter." As shown in Fig. 3, the Pi filter 23 is provided on a wiring L, by which the controller 21 is wired to analog demultiplexers 221. The wiring L receives a supply of the second signal R generated by the Pi filter 23. The second signal R supplied to the wiring L is supplied in parallel to the analog demultiplexers 221.

The wiring L extends over the keys 12 (i.e., from one end of the keyboard 10 to the other). As a result, when the first signal r is supplied to the wiring L, electromagnetic noise, which is caused by electromagnetic waves emitted from the wiring L, is apparent. Therefore, the Pi filter 23 according to the embodiment reduces a high frequency component of the first signal r obtained from the controller 21 that is higher than a cutoff frequency, while a low frequency component lower than the cutoff frequency is maintained. Specifically, the second signal R is an analog signal having a signal level that changes continuously. For example, the second signal R is a current signal or a voltage signal with a sine wave or a wave similar thereto. As described above, the second signal R with the reduced high frequency component is supplied to the wiring L. As a result, the radiation of the high frequency component that is noise from the wiring L is suppressed. Accordingly, the noise radiated from wiring L is suppressed from affecting surrounding electronic devices, and electromagnetic compatibility (EMC) is improved.

As shown in FIG. 3, the signal processor 22 includes a plurality of M analog demultiplexers 221 and a plurality of M analog multiplexers 222 (M is a natural number of two or more). In this embodiment, each of the analog demultiplexers 221 is wired to a plurality of N resonant circuits 60 (N is a natural number of two or more). For example, in a configuration in which the keyboard 10 includes 88 keys 12, each of eight (M = 8) analog demultiplexers 221 is wired to eleven (N=11) resonant circuits 60.

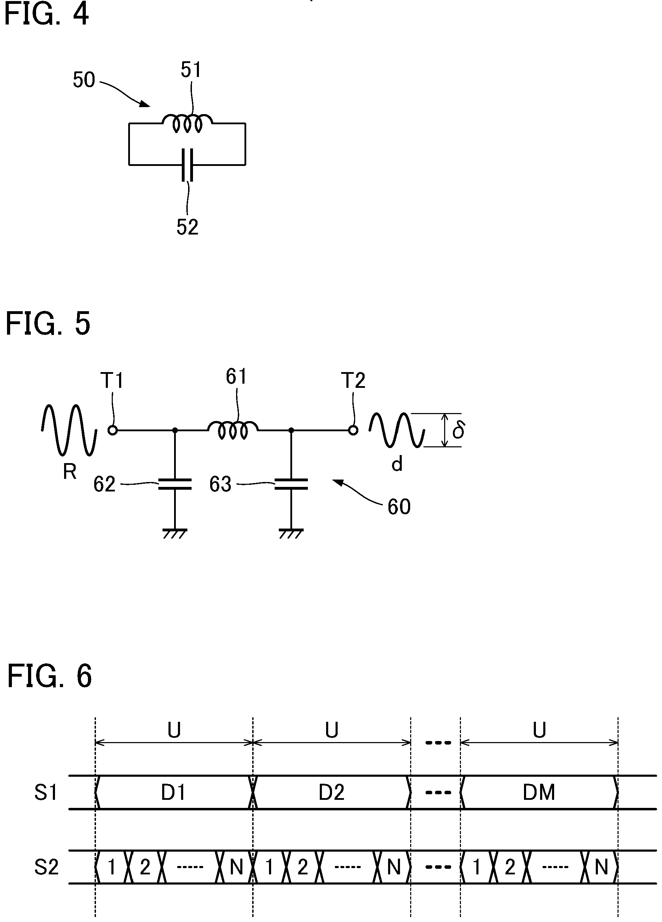

Each analog demultiplexer 221 is a distributor that distributes the second signal R to each of the resonant circuits 60. Specifically, each analog demultiplexer 221 supplies the second signal R to each of the N resonant circuits 60 by time division. FIG. 6 is a timing chart showing that selection signals S1 and S2 are supplied by the controller 21 to each analog demultiplexer 221 and each analog multiplexer 222.

The selection signal S1 is a signal that is used to select the M analog demultiplexers 221 one by one, as well as the M analog multiplexers 222 one by one. The controller 21 selects the m-th (m = 1 to M) analog demultiplexer 221 in conjunction with the m-th analog multiplexer 222. The selection signal S2 is a signal that is used to select the N resonant circuits 60 of a corresponding analog demultiplexer 221 one by one.

The controller 21 outputs the selection signal S1 to the M analog demultiplexers 221 one by one to select the analog demultiplexer 221 one by one in each selection period U. In each selection period U, the m-th analog demultiplexer 221 and the m-th analog multiplexer 222 are selected by the controller 21.

Each analog demultiplexer 221 supplies, based on the selection signal S2, the second signal R to each of the N resonant circuits 60 by time division, within the selection period U selected by the controller 21. Each analog multiplexer 222 receives, based on the selection signal S2, an output signal d from each of the N resonant circuits 60 by time division, within the selection period U selected by the controller 21. That is, the two operations are executed in conjunction with each other, in one of which a second signal R is output, by the m-th analog demultiplexer 221, to the n-th (n = 1 to N) resonant circuit 60 of the N resonant circuits 60, and in the other of which an output signal d from the nth resonant circuit 60 is received by the m-th analog multiplexer 222. The cycle of the second signal R is sufficiently shorter than a period during which one resonant circuit 60 is selected by the analog demultiplexer 221.

As shown in FIG. 2, the signal processor 22 includes detectable portions 50 and resonant circuits 60. The detectable portions 50 are disposed on the respective keys 12, and the resonant circuits 60 are disposed on the respective keys 12.

As shown in FIG. 2, a detectable portion 50 is disposed on a corresponding key 12. Specifically, the detectable portion 50 is disposed on a bottom surface of the key 12 (hereinafter, "mounting surface") 122. The detectable portion 50 includes a first coil 51.

FIG. 4 is a circuit diagram showing an example of an electrical configuration of each detectable portion 50. Each detectable portion 50 comprises a resonant circuit including the first coil 51 and a capacitive element 52. One end of the first coil 51 is wired to one end of the capacitive element 52, and the other end of the first coil 51 is wired to the other end of the capacitive element 52. The resonant frequency of the detectable portion 50 is the same for the resonant circuit 60, but the resonant frequencies of the detectable portion 50 and the resonant circuit 60 may differ from each other for each key 12 or for each octave.

The resonant circuits 60 shown in FIG. 2 are disposed on the supporting member 14 along the direction in which the keys 12 are arranged. Each of the resonant circuits 60 includes a second coil 61. The resonant circuits 60 are an example of "detection circuits."

The first coil 51 and the second coil 61 oppose each other and are vertically spaced apart from each other. A distance between the detectable portion 50 and the resonant circuit 60 (distance between the first coil 51 and the second coil 61) changes depending on the position Z of the end 121 of the key 12.

FIG. 5 is a circuit diagram showing an electrical configuration of each resonant circuit 60. The resonant circuit 60 includes an input T1, an output T2, a second coil 61, a capacitive element 62, and a capacitive element 63. The second coil 61 is wired between the input T1 and the output T2. The capacitive element 62 is wired between the input T1 and the ground wire. The capacitive element 63 is wired between the output T2 and the ground wire.

The second signal R is supplied to the input T1 of the resonant circuit 60, as shown in FIG. 5. The frequencies of the first signal r and the second signal R are substantially identical to those of the resonance frequencies of the resonant circuit 60 and the detectable portion 50. A current in accordance with the second signal R is supplied to the second coil 61, which generates a magnetic field in the second coil 61. The electromagnetic induction generated by the magnetic field in the second coil 61 causes an induced current in the first coil 51. As a result, a magnetic field, which has a direction such that change in the magnetic field in the second coil 61 is cancelled, is generated in the first coil 51. It is noted that the frequencies of the first signal r and the second signal R may differ from those of the resonant circuit 60 and the detectable portion.

A magnetic field in the first coil 51 changes depending on a distance between the first coil 51 and the second coil 61. As a result, an output signal d with an amplitude level δ depending on the distance therebetween is output from the output T2 of the resonant circuit 60. That is, the output signal d is a cyclic signal having a signal level that fluctuates with the same cycle as that of the second signal R.

The analog multiplexer 222 is a selector, and it selects a resonant circuits 60 that acquires the second signal R from among the resonant circuits 60. The analog multiplexer 222 acquires, based on the selection signal S2, an output signal d from each of the resonant circuits 60 by time division, within the selection period U selected by the controller 21. As will be understood from the above description, the signal processor 22 shown in FIG. 3 generates, for each of the keys 12, an output signal d with a signal level depending on the distance between the first coil 51 and the second coil 61 of a corresponding key 12.

The rectifier 24 is wired to the controller 21 and the analog multiplexers 222. The rectifier 24 converts the output signal d, which is output by time division from the corresponding analog multiplexers 222, to a DC voltage depending on the amplitude δ. Then the rectifier 24 outputs the converted DC voltage to the controller 21. The rectifier 24 is, for example, a diode. The method by which the output signal d is rectified by the rectifier 24 is not particularly limited, and the method may be a half-wave rectification or a full-wave rectification.

The controller 21 converts the analog DC voltage acquired from the rectifier 24 to a digital DC voltage, and analyzes the converted signal to identify the position Z of each key. The controller 21 instructs the sound source circuit 34 to produce a musical sound based on the position Z of each key 12.

The sound source circuit 34 generates an audio signal V representative of the musical sound as instructed by the detection system 20. The audio signal V is a signal representative of a musical sound with a pitch that corresponds to one of the keys 12 operated by the user. Specifically, the sound source circuit 34 generates an audio signal V representative of the musical sound instructed by the controller 21. That is, the sound source circuit 34 generates an audio signal V depending on the temporal change in the position Z of each key. For example, the volume of the audio signal V is controlled in accordance with the speed of the change in position Z.

The sound output device 40 outputs sound represented by the audio signal V. By acquiring the audio signal V from the sound source circuit 34, the sound output device 40 outputs musical sound depending on the playing operation carried out by the user (pressing and releasing each key 12). For example, a speaker or a headphone set is used as the sound output device 40.

As explained above, in this embodiment, a first signal r having the signal level that discontinuously changes over time is converted, by the Pi filter 23, to a second signal R having the signal level that continuously changes over time. That is, a high frequency component of the first signal r is reduced by the Pi filter 23, thereby generating the second signal R. Accordingly, noise caused by the high frequency component is suppressed from affecting surrounding electronic devices, and electromagnetic compatibility (EMC) is improved.

In this embodiment, each analog demultiplexer 221 distributes the second signal R to each of the resonant circuits 60. As a result, compared to a configuration in which the second signal R is supplied to the resonant circuits 60 in parallel, load on the controller 21 is reduced.

Furthermore, in this embodiment, the Pi filter 23 is used to convert the first signal r to the second signal R. As a result, manufacturing cost of the detection system 20 is reduced, and ease and versatility in configuration of the system is improved.

### B: Modifications

The embodiment according to the present disclosure have been described. The present disclosure is not limited to the above-mentioned embodiment and various modifications can be made. Specific modifications added to each of the aspects described above are described below. Two or more modes selected from the following descriptions may be combined with one another as appropriate as long as such combination does not give rise to any conflict.
(1) In the above embodiment, the configuration has been described in which the analog demultiplexers 221 are independent from the analog multiplexers 222. However, the analog demultiplexers 221 and the analog multiplexers 222 may be unitary. A specific aspect of the detection system 20 will be described below.

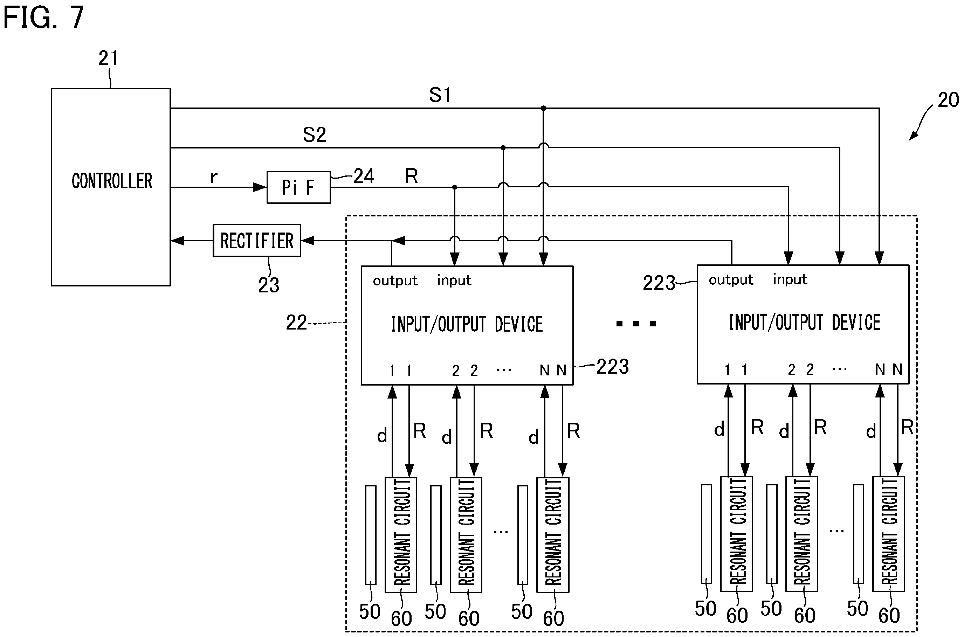

   FIG. 7 is a circuit diagram showing an example of an electrical configuration of a detection system 20 according to a modification. The detection system 20 includes a plurality of M Input/Output devices 223. Each of the M Input/Output devices 223 is an electronic circuit integrally comprising the analog demultiplexers 221 and the analog multiplexers 222. Each Input/Output device 223 supplies a second signal R to each of the N resonant circuits 60 by time division, and acquires an output signal d from each of the N resonant circuits 60 by time division. In Fig. 7, configurations similar to those described above are indicated by the same reference sign, and description thereof is omitted.
(2) In the above embodiment, a configuration has been described in which a displacement of the key 12 of the musical keyboard instrument 100 is detected. However, movable members on which displacements are detected using the detection system 20 are not limited to the keys 12. Specific examples of the movable members will be given below.

### Mode A

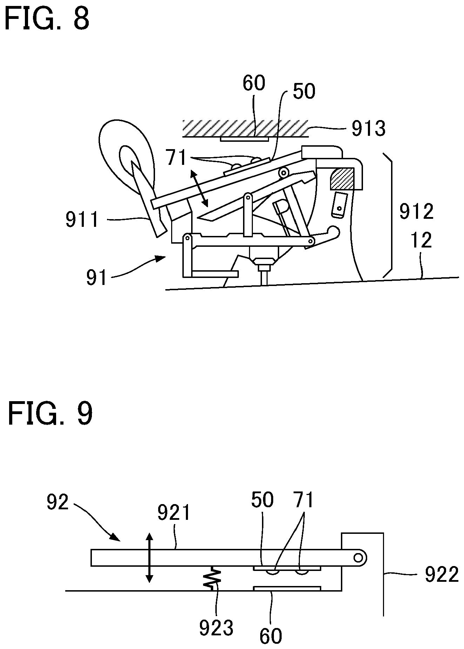

FIG. 8 is a schematic diagram of a configuration in which the detection system 20 is applied to a strike mechanism 91 of the musical keyboard instrument 100. As in an acoustic piano, the strike mechanism 91 is a mechanism that strikes a string (not shown) in conjunction with a displacement of each key 12 in the keyboard 10. Specifically, the strike mechanism 91 includes, for each key 12, a hammer 911 capable of striking a string by rotation and a transmission mechanism 912 (e.g., a whippen, jack, repetition lever, etc.) that causes the hammer 911 to rotate in conjunction with the displacement of the key 12. By the above configuration, the detection system 20 detects displacement of the hammer 911. Specifically, the detectable portion 50 is disposed on the hammer 911 (e.g., at a hammer shank). For example, the wiring board 54, which comprises the detectable portion 50, is fixed to the hammer 911 by the fixing members 71 that are magnetic bodies. In contrast, the resonant circuit 60 is disposed on the supporting member 913. The supporting member 913 is a structure configured to support, for example, the strike mechanism 91. In the present disclosure, the detectable portion 50 may be disposed on a member of the strike mechanism 91 other than the hammer 911.

### Mode B

FIG. 9 is a schematic diagram of a configuration in which the detection system 20 is applied to a pedal mechanism 92 of the musical keyboard instrument 100. The pedal mechanism 92 includes a pedal 921 operated by a user's foot, a supporting member 922 that supports the pedal 921, an elastic body 923 that urges the pedal 921 in the upward vertical direction. By the above configuration, the detection system 20 detects the displacement of the pedal 921. Specifically, the detectable portion 50 is disposed on the bottom of the pedal 921. That is, the wiring board 54, which comprises the detectable portion 50, is fixed to the pedal 921 by the fixing members 71 that are magnetic bodies. The resonant circuit 60 is disposed on the supporting member 922 such that the resonant circuit 60 opposes the detectable portion 50. In the present disclosure, a musical instrument for which the pedal mechanism 92 is used is not limited to the musical keyboard instrument 100. For example, the pedal mechanism 92 of the same configuration may be used in a freely selected musical instrument, such as a percussion instrument, etc.

As will be understood from the above examples, an object of detection by the detection system 20 is a movable member that is displaced in response to a playing operation. The movable member includes an instrument operating element, such as the keys 12 or the pedal 921, directly operated by a user and also includes a structure such as the hammer 911 that is displaced in conjunction with an operation made to an instrument playing element. However, the movable member according to the present disclosure is not limited to a member that is displaced in response to a playing operation. That is, the movable member should be understood as being a displaceable member, regardless of how displacement takes place.

(3) In the above embodiment, a configuration has been described in which the musical keyboard instrument 100 includes the sound source circuit 34. However, for example, in a configuration in which the musical keyboard instrument 100 includes a sound producing mechanism, such as a strike mechanism 91, the sound source circuit 34 may be omitted. The detection system 20 is used to record how the musical keyboard instrument 100 is played.

As will be understood from the above description, the present disclosure may be specified as an apparatus (instrument playing apparatus) that controls a music sound by outputting to the sound source circuit 34 or the sound producing mechanism an operation signal in accordance with a playing operation. The concept of the instrument playing apparatus includes not only an instrument (the musical keyboard instrument 100) provided with the sound source circuit 34 or the sound producing mechanism as described in each of the above embodiments, but also a device not provided with the sound source circuit 34 or a sound producing mechanism (e.g., a MIDI controller or the pedal mechanism 92 as described above). That is, the instrument playing apparatus according to the present disclosure is expressed as an apparatus operated by an instrument player (or an operator) for playing an instrument.

(4) In the above embodiment, each of the analog demultiplexers 221 is selected selectively, but two or more analog demultiplexers 221 of the analog demultiplexers 221 may be selected in parallel.

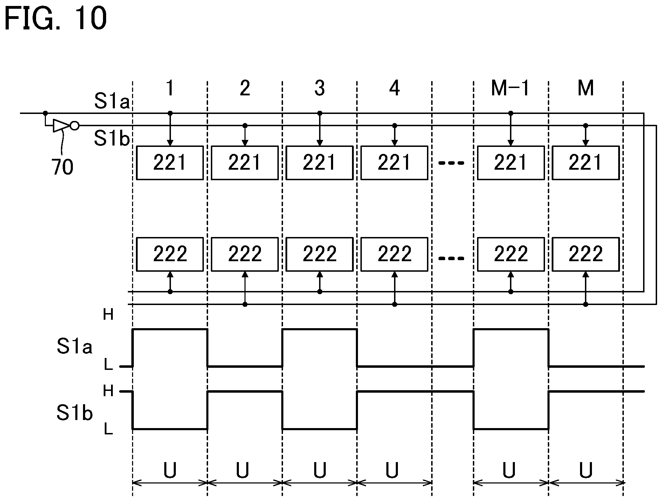

FIG. 10 is a partial configuration of a detection system 20 according to a modification. Each of the odd-numbered analog demultiplexers 221 among the analog demultiplexers 221 receives a supply of a selection signal S1a from the controller 21.

In contrast, each of the even-numbered analog demultiplexers 221 among the analog demultiplexers 221 receives a supply of a selection signal S1b. The selection signal S1a and S1b change from high to low, and vice versa, for each selection period U. The selection signals S1a and S1b are signals having opposite phase to each other. For example, the level of the selection signal S1a is inverted by an inversion circuit 70, thereby generating the selection signal S1b.

In the selection period U during which the selection signal S1a is set to high, the odd-numbered M/2 analog demultiplexers 221 are selected in parallel. In contrast, in the selection period U during which the selection signal S1b is set to high, the even-numbered M/2 analog demultiplexers 221 are selected in parallel. Each of the selected analog demultiplexers 221 distributes the second signal R to the resonant circuits 60 by time division. This operation is the same as that in the above embodiment.

In the above description, the configuration and the operation of the analog demultiplexers 221 have been described. The same configuration and operation are applied to the analog multiplexers 222. Specifically, the selection signal S1a is supplied to each of the odd-numbered analog multiplexers 222, and the selection signal S1b is supplied to each of the even-numbered analog demultiplexers 221.

(5) In the above embodiment, the Pi filter 23 reduces a high frequency component of the first signal r output from the controller 21. However, the configuration for reducing the high frequency component of the first signal r is not limited to the Pi filter 23. A freely selected configuration of a low-pass filter may be used as a signal converter that converts the first signal r to the second signal R. Examples of a low-pass filter applied to the processing of the first signal r include a multi-order low-pass filter and an active filter. For example, an n-type filter or a T-type filter may be applied.

(6) In the above embodiment, signals output from the controller 21 are output to the signal processor 22 via the wiring L. The transmission method used by the controller 21 when outputting signals to the signal processor 22 is freely selectable. For example, a differential transmission method for transmitting two systems of signals having opposite phase to each other may be employed. The differential transmission method is, for example, low voltage differential signaling (LVDS).

(7) In the above embodiment, the controller 21 outputs the first signal r. However, the signal source of the first signal r may not be the controller 21. As long as the signal source outputs the second signal R with a sine wave or a wave similar thereto, the Pi filter 23 may be omitted if necessary.

(8) In the above embodiment, the configuration for detecting a displacement of each of the keys 12 has been described. However, the present disclosure may also be applied to a technique for detecting displacements of other movable members, such as pedals. The present disclosure is not particularly limited thereto.

(9) In the above embodiment, the configuration has been described in which a distance between the second coil 61 and the detectable portion 50 changes by a playing operation. Instead of this configuration, an area at which the second coil 61 opposes the detectable portion 50 (hereinafter, "opposing area") may change by the playing operation. That is, in the present disclosure, the opposing area or the distance between the second coil 61 and the detectable portion 50 changes by the playing operation.

### C: Appendices

The following configurations are derivable from the embodiments described above.

A detection system according to one aspect (Aspect 1) of the present disclosure is a detection system for detecting a position of each of a plurality of movable members that are displaceable by a playing operation, the detection system including: a controller configured to generate a first signal with a signal level that discontinuously changes over time; a signal converter configured to convert the first signal to a second signal with a signal level that continuously changes over time; and a signal processor configured to generate, using the second signal, an output signal that depends on a position of each of the plurality of movable members.

By this configuration, the first signal with a signal level that discontinuously changes over time is converted, by the signal processor, a second signal with a signal level that continuously changes over time. That is, a high frequency component of the first signal is reduced by the signal converter, thereby generating the second signal. Accordingly, noise caused by the high frequency component is suppressed from affecting surrounding electronic devices, and electromagnetic compatibility (EMC) is improved.

In a specific aspect (Aspect 2) according to Aspect 1, the signal processor includes: a plurality of detectable portions, each of which is provided on a corresponding movable member among the plurality of movable members; and a plurality of detection circuits, each of which is configured to generate an output signal from the second signal, the output signal depending on a position of the corresponding movable member.

In a specific aspect (Aspect 3) according to Aspect 2, each of the plurality of detection circuits includes a coil that opposes a corresponding detectable portion among the plurality of detectable portions, and the signal processor is configured to change the second signal that depends on a distance between the coil and the corresponding detectable portion.

By this aspect, the second signal changes depending on distance between the coil and the movable member. That is, the second signal changes depending on an amount of displacement of the movable member, so that the presence or absence of a key press on the keyboard is detected.

In a specific aspect (Aspect 4) according to Aspect 2 or 3, the signal processor further includes a distributor configured to distribute the second signal to each of the plurality of detection circuits.

In the above aspect, the second signal is distributed to each of the plurality of detection circuits. Accordingly, load on the controller is reduced compared to a configuration in which the second signal is supplied to the plurality of detection circuits in parallel.

In a specific aspect (Aspect 5) according to Aspect 4, the distributor is an analog demultiplexer.

In a specific aspect (Aspect 6) according to any one of Aspects 2 to 5, the signal processor further includes a selector configured to select a detection circuit that generates the output signal from among the plurality of the detection circuits.

In a specific aspect (Aspect 7) according to Aspect 6, the selector is an analog multiplexer.

In a specific aspect (Aspect 8) according to Aspect 7, the signal converter is a Pi filter.

By this aspect, the Pi filter is applied to the signal converter. As a result, design cost of the detection system is reduced, and ease and versatility in configuration of the system is improved.

In a specific aspect (Aspect 9) according to any one of Aspects 1 to 8, the first signal is a square wave signal, and the second signal is a sine wave signal or a wave signal similar thereto.

An instrument playing apparatus according to one aspect (Aspect 10) of the present disclosure includes: a plurality of movable members that are displaceable by a playing operation; a controller configured to generate a first signal with a signal level that discontinuously changes over time; a signal converter configured to convert the first signal to a second signal with a signal level that continuously changes over time; and a signal processor configured to generate, using the second signal, an output signal that depends on a position of each of the plurality of movable members.

An electronic musical keyboard instrument according to one aspect (Aspect 11) of the present disclosure includes: a plurality of keys that are displaceable by a playing operation; a controller configured to generate a first signal with a signal level that discontinuously changes over time; a signal converter configured to convert the first signal to a second signal with a signal level that continuously changes over time; a signal processor configured to generate, using the second signal, an output signal that depends on a position of each of the plurality of movable members; and a sound source circuit configured to generate an audio signal in accordance with the output signal generated by the signal processor.

A detection method according to one aspect (Aspect 12) of the present disclosure is a detection method for detecting a position of each of a plurality of movable members that are displaceable by a playing operation, the detection method including: generating a first signal with a signal level that discontinuously changes over time; converting the first signal to a second signal with a signal level that continuously changes over time; and generating, using the second signal, an output signal that depends on a position of each of the plurality of movable members.

### Description of Reference Signs

100... musical keyboard instrument (instrument playing apparatus), 10...keyboard, 12...key, 20...detection system, 21...controller, 22...signal processor, 23...Pi filter, 24...rectifier, 32...storage device, 34...sound source circuit, 40... sound output device, 50...detectable portion, 51...first coil, 52...capacitive element, 60...resonant circuit, 61...second coil, 62 and 63...capacitive element, 71...fixing member, 91...strike mechanism, 92...pedal mechanism, 911...hammer, 912...transmission mechanism, 913... support member, 921...pedal, 922...supporting member, 923... elastic body

## Claims

1. A detection system for detecting a position of each of a plurality of movable members that are displaceable by a playing operation, the detection system comprising:
a controller configured to generate a first signal with a signal level that discontinuously changes over time;
a signal converter configured to convert the first signal to a second signal with a signal level that continuously changes over time; and
a signal processor configured to generate, using the second signal, an output signal that depends on a position of each of the plurality of movable members.

2. The detection system according to claim 1,
wherein the signal processor includes:
a plurality of detectable portions, each of which is provided on a corresponding movable member among the plurality of movable members; and
a plurality of detection circuits, each of which is configured to generate an output signal from the second signal, the output signal depending on a position of the corresponding movable member.

3. The detection system according to claim 2,
wherein each of the plurality of detection circuits includes a coil that opposes a corresponding detectable portion among the plurality of detectable portions, and
wherein the signal processor is configured to change the second signal that depends on a distance between the coil and the corresponding detectable portion.

4. The detection system according to claim 2 or 3,
wherein the signal processor further includes a distributor configured to distribute the second signal to each of the plurality of detection circuits.

5. The detection system according to claim 4,
wherein the distributor is an analog demultiplexer.

6. The detection system according to any one of claims 2 to 5,
wherein the signal processor further includes a selector configured to select a detection circuit that generates the output signal from among the plurality of the detection circuits.

7. The detection system according to claim 6,
wherein the selector is an analog multiplexer.

8. The detection system according to any one of claims 1 to 7,
wherein the signal converter is a Pi filter.

9. The detection system according to any one of claims 1 to 8,
wherein the first signal is a square wave signal, and
wherein the second signal is a sine wave signal or a wave signal similar thereto.

10. An instrument playing apparatus comprising:
a plurality of movable members that are displaceable by a playing operation;
a controller configured to generate a first signal with a signal level that discontinuously changes over time;
a signal converter configured to convert the first signal to a second signal with that level continuously changes over time; and
a signal processor configured to generate, using the second signal, an output signal that depends on a position of each of the plurality of movable members.

11. An electronic musical keyboard instrument comprising:
a plurality of keys that are displaceable by a playing operation;
a controller configured to generate a first signal with a signal level that discontinuously changes over time;
a signal converter configured to convert the first signal to a second signal with a signal level that continuously changes over time;
a signal processor configured to generate, using the second signal, an output signal that depends on a position of each of the plurality of movable members; and
a sound source circuit configured to generate an audio signal in accordance with the output signal generated by the signal processor.

12. A detection method for detecting a position of each of a plurality of movable members that are displaceable by a playing operation, the detection method comprising:
generating a first signal with a signal level that discontinuously changes over time;
converting the first signal to a second signal with a signal level that continuously changes over time; and
generating, by using the second signal, an output signal that depends on a position of each of the plurality of movable members.
